# EUROPEAN PATENT SPECIFICATION

(11) **EP 3 764 265 B1**
(45) Date of publication and mention of the grant of the patent: **26.02.2025**
(21) Application number: 20185320.7
(22) Date of filing: 10.07.2020
(51) Int. Cl.: G06F 21/62

(54) **SYSTEM, METHOD AND COMPUTER PROGRAM PRODUCT FOR MONITORING COMPLIANCE TO LEGAL REQUIREMENTS**
SYSTEM, VERFAHREN UND COMPUTERPROGRAMMPRODUKT ZUR ÜBERWACHUNG DER EINHALTUNG GESETZLICHER ANFORDERUNGEN
SYSTÈME, PROCÉDÉ ET PRODUIT-PROGRAMME INFORMATIQUE POUR LA SURVEILLANCE DE LA CONFORMITÉ AUX EXIGENCES LÉGALES

(30) Priority: 12.07.2019 EP 19290056
(43) Date of publication of application: 13.01.2021
(73) Proprietor: Commissariat à l'Energie Atomique et aux Energies Alternatives, 75015 Paris (FR)
(72) Inventor: ANTIGNAC, Thibaud, 75014 PARIS (FR); DE MONTETY, Colombe, 78000 Versailles (FR); SLIM, Christophe, 75015 PARIS (FR)
(74) Representative: Atout PI Laplace

(56) References cited:
- HAPPA JASSIM ET AL: "Run-Time Monitoring of Data-Handling Violations", 31 January 2019, ADVANCES IN DATABASES AND INFORMATION SYSTEMS; [LECTURE NOTES IN COMPUTER SCIENCE; LECT.NOTES COMPUTER], SPRINGER INTERNATIONAL PUBLISHING, CHAM, PAGE(S) 213 - 232, ISBN: 978-3-319-10403-4, XP047502239
- VAN DER AALST W M P ET AL: "Workflow Mining: a Survey of Issues and Approaches", DATA & KNOWLEDGE ENGINEERING, AMSTERDAM, NL, vol. 47, no. 2, 1 January 2003 (2003-01-01), pages 237 - 267, XP003019354

## Description

### Field of the Invention

The present invention relates to systems and methods for monitoring compliance to legal requirements.

### Background Art

Collecting, storing, sharing and otherwise processing personal data has become omnipresent with the age of information. In view of the inherent risks for the data subjects, notably in case of unauthorized processing, there was an entry into force of several regulations regarding data protection.

As an example, the European Union has mutually agreed on a General Data Protection Regulation (GDPR) which came into force on May 25, 2018. The GDPR aims at the protection of natural persons with regard to the processing of personal data, to the free movement of such data, and to protecting data subjects at a high level, all creating many obligations for Data Protection Officers (DTO) (also named as data controllers or controllers) and many rights for data subjects regarding any processing of personal data.

More generally, public and private organizations are faced to unprecedented challenges to ensure compliance with new data protection rules. To help organizations comply with the many obligations and rights, the academics and technologists propose implementations of various solutions leading to what is known today as "privacy engineering". Among the main goals of these solutions are the one of enabling compliant data processing by controllers and the one of increasing trust in compliance by data subjects. While "data protection by design" constitutes a keystone of the regulation, many legacy systems are not designed and implemented with this concept in mind.

Designed to modernize laws that protect the personal information of individuals, the GDPR also provides for strong penalties in case of violation by any given data processor. Today, the GDPR has become one of the key elements in regulatory compliance and its enforcement is thoroughly inspected during a legal audit.

However, because of the increased technological complexities, the large-scale and multiple data-exploiting business practices and the rigorous, continuous tasks implied, processors of personal data may not be able to properly ensure compliance with the regulation.

Formal methods are a feasible solution to ensure compliance with data protection rules with a high level of trust. An example is the described in"Formal methods as a link between software code and legal rules", In: Barthe G., Pardo A., Schneider G. (eds) Software Engineering and Formal Methods, SEFM 2011, Lecture Notes in Computer Science, vol 7041, Daniel Le Métayer. In this paper, the author calls for the use of these techniques to bridge the gap between legal and technical means in reducing privacy risks related to persons whose data are processed. This work provides a formal framework of legal concepts which can serve as a basis for modeling entities' rights and duties. However, the author points out the subtlety of real-life situations that cannot be replicated in programs, because they often go beyond mere dual and static situations.

Several articles describe various approaches related to regulation compliance, one of them being from Maxwell, J. C., Antón, A. I.: "Developing production rule models to aid in acquiring requirements from legal texts". 17th IEEE International Requirements Engineering Conference 2009, vol., pp. 101-110. The problem they aim at solving is compliance with complex regulation about the use of patient records by various organizations. In their methodology, the authors suggest translating legal rules into rights and obligations as well as implied ones. They develop production rules, i.e. logic rules generated from a legal rule, and they refactor the rules and add implication rules. Moreover, the documents Happa, J., et al., Run-Time Monitoring of Data-Handling Violations. In: Katsikas, S., et al. Computer Security. SECPRE CyberlCPS 2018. Lecture Notes in Computer Science, vol 11387. Springer, and W.M.P. van der Aalst, et al., Workflow mining: A survey of issues and approaches, Data & Knowledge Engineering, Volume 47, Issue 2, 2003, Pages 237-267, constitute relevant prior art.

Current compliance verification generally involves analysis on a processing-by-processing, data-per-data basis, often in a mechanical, non-automatic fashion. In addition, existing compliance tools are mostly built upon business expertise and do not rely on an accurate representation of the regulation, which doesn't provide any guarantee in terms of their adequacy.

None of the cited references or existing approaches provides a unified interface between data protection requirements coming from the legal domain with IT system artifacts coming from the technical domain.

Consequently there is a need for solutions to check compliance of systems to legal requirements and to remediate to data protection issues, even for an existing implementation of any processing within an Information Technology (IT) framework which is not "data protection by design" system.

The present invention offers a solution to these needs by solving at least the concern of a real-time and constant/automatic analysis of personal data processing, notably in a scaled-up environment having numerous processing.

### Summary of the invention

The invention is defined by the appended independent claims. Preferred embodiments are set out in the dependent claims.

Accordingly, an object of the invention is to provide a method for "a posteriori" verification of compliance to data protection rules, when processing of personal data has already happened.

The invention allows:
- constantly monitoring the state of the system/data processing with the regulation, on a real-time, automatic and accurate basis, thereby allowing to analyze conformance through a log-based system, even more so in a scaled-up environment ; and
- a trustful and accurate compliance checking with a formal (i.e. correct by design, extensible, custom policy, case-law update) representation of a legal regulation serving as a baseline for the checking.

Advantageously, the invention allows monitoring and checking compliance of legacy systems through the analysis of the log files of the IT system processing personal data.

The compliance monitoring system of the invention operates in an IT system that processes data privacy operations, and comprises at least:
- an IT system model: a modelization of the IT system for which the compliance of an execution is verified, allowing a representation thru actions and states of all events occurring in the IT system ;
- an IT log file : a logger to record information representing all events occurring in the IT system ;
- a Regulation model : a formal model of the data protection regulatory text for which compliance is expected ;
- a Compliance Checker : a compliance checking engine or module able to run a resolution algorithm to check whether or not an obligation/a right is satisfied , and configured to detect any violation of the regulation by monitoring the IT system's activity logs.

In an embodiment, the method applies for checking compliance to the GDPR. To achieve, an operational model of the GDPR is generated and used to ease the interactions with standard operational models of the IT system. In some embodiments, a core subset of the GDPR is modeled in the Prolog language. Different dimensions required to properly address data protection obligations are covered, and in particular time-related properties such as retention time. The logic-based GDPR model is kept as close as possible to the legal wording to allow a Data Protection Officer to explore the model in case of need.

The two operational models - the IT system model and the GDPR model - are used by a compliance checker configured to provide a result regarding which compliance aspects is not properly covered. The compliance checking module is configured to rely on the activity of the IT log file which records all events having occurred in the IT system. The compliance checker is further configured to generate alerts or flags for any point which is identified as requiring a further verification by a Data Protection Officer (DPO). Advantageously, the compliance checker is configured to provide information on which requirement is not met, i.e. which action (of the IT model) was expected to be present in the log (as an event) and which is not found when running the compliance checking process.

As some alerts may be false alerts because of a lack of contextual information or because of actual violations, advantageously, the system of the invention allows adding contextual information for a remedy.

Another aspect of the present invention is to provide an extensible architecture organizing how the rules from a regulation model can be operationalized through an interface between technique-oriented levels (preferably modelled as state machines) and legal-oriented levels (preferably modelled as property definitions).

In an embodiment, the operational models are used by a deontic-based compliance checker to reason about possible violations.

The present invention is of general application to detect data protection compliance violations for any private or public organizations, and is particularly adapted for administrative, managerial, supervisory governance, risk-management, compliance, accountability, transparency, liability and responsibility purposes.

To achieve the foregoing objects, a system, method and computer program product for monitoring and checking compliance to legal requirements are provided.

In an embodiment, a computer implemented method for monitoring compliance of computer data processing with data protection rules of legal regulation, wherein processing of data being implemented within an Information Technology system, comprises the steps of:
- on receiving a query for assessing compliance of a data processing to data protection rules, gathering information from an IT log file of all processing events having occurred in the IT system ; and
- determining compliance or not by running on the query a resolution algorithm using the information from the IT log file; an IT system model representing the IT system through actions and states; a regulation model representing the protection rules of the legal regulation through a set of rules with rights and obligations; and processing context information.

In an embodiment, the compliance determination step comprises determining if the data processing does or doesn't fulfill a mandatory obligation.

In an embodiment, the compliance determination step comprises determining which action was expected to be present in the IT log file and which is not found.

In an embodiment, the method comprises replying the query with a compliance approval when the determination step computes no violation, or replying the query with a compliance deny when the determination step computes a potential violation of the protection rules.

In an embodiment, the determination step uses time as an indicator.

In an embodiment, the logic modelling of the regulation model and of the IT system model uses a same syntax.

In an embodiment, the set of rules is defined by a formal computing declarative language such as a "Prolog-like" language.

In an embodiment, the resolution algorithm runs a backtracking routine.

In an embodiment, the determination step comprising instantiating variables used in the rules.

In an embodiment, the legal regulation is the General Data Protection Regulation "GDPR".

The invention further addresses a computer system comprising:
- a memory having non-transitory computer executable instructions and a dynamic program of an application; and
- a processor for executing the non-transitory computer executable instructions, wherein execution of the computer executable instructions causes the processor to execute at least monitoring and checking compliance to legal requirements.

The invention further addresses a computer program comprising instructions for carrying out the steps of the method according to any one of the claims when said computer program is executed on a suitable computer device.

Further aspects of the invention will now be described, by way of preferred implementation and examples, with reference to the accompanying figures.

### Brief description of the drawings

The above and other items, features and advantages of the invention will be better understood by reading the following more particular description of the invention in conjunction with the figures wherein:
Fig. 1 shows a general block diagram of a computing environment to operate the system of the invention;
Fig.2 is a block diagram of the main components of the compliance checker in accordance with some embodiment of the present invention;
Fig. 3a and Fig.3b illustrate an IT model and a regulation model of the system of the present invention in accordance with an embodiment;
Fig.4 is a flow chart of the main steps of the compliance monitoring process of the present invention; and
Fig.5 details the operations of the compliance checking step of figure 4 in accordance with an embodiment of the present invention.

### Detailed description of the invention

For the purposes of the detailed description which is oriented towards an application of the invention to the GDPR, the following remarks are to be set:
Article 24 of GDPR states: "Taking into account the nature, scope, context and purposes of processing as well as the risks of varying likelihood and severity for the rights and freedoms of natural persons, the controller shall implement appropriate technical and organizational measures to ensure and to be able to demonstrate that processing is performed in accordance with this Regulation. Those measures shall be reviewed and updated where necessary."

To address the inherent complexity of the law and fill the gap between legal and technical domains, the inventors have developed for the GDPR, a method based on a translation of core GDPR rules into a logic programming language to help and support legal practitioners in their work. The present invention provides a method for the Data Protection Officer (i.e. DPO or shortly the Controller) to comply with its accountability (i.e. recited at least in Article 24 of GDPR), through the demonstration of its compliance while carrying any current or future data processing.

The proposed method (i.e. the software architecture) and accordingly the system (i.e. the hardware architecture), provide compliance checking operations thru a compliance checking module that is configured to identify and point out the issues, for any given processing of personal data that should be remedied. The compliance checker is a tool configured to provide assistance to a Data Protection Officer, whose role is notably to ensure that the organization processes the personal data in compliance with the applicable rules, and to facilitate the compliance verification, which is the starting point for data controllers' accountability.

While executing a definitive compliancy diagnosis in each and every case would be a complex or impossible task, for a preferred and real implementation, the inventors have adopted a conservative approach by enabling the compliance checker to raise alerts when in doubt. Consequently while in some embodiments, a raised alert should not necessarily mean there is a non-compliance, however all non-compliances are tagged and raise alerts. Advantageously, this approach, though increasing the number of false alerts, ensures a high level of trust in the diagnosis.

Many works, some of which cited previously, have shown that legal rules can be interpreted sometimes according to very different paradigms than logic rules (see for instance a data flow diagram-based description, in Mina Deng, Kim Wuyts, Riccardo Scandariato, Bart Preneel, and Wouter Joosen "A privacy threat analysis framework: supporting the elicitation and fulfillment of privacy requirements" Requirements Engineering Journal, 16(1):3-32, 2011).

However, in the context of GDPR, it is nevertheless very different from previous developments because of the large concepts and ambiguous writing of some articles of the GDPR.

As such, at least for sake of clarity of the description, however with no intend to limit the scope of the invention, the following detailed description is focused on two key articles of GDPR, namely Article 5 related to principles on processing of personal data, and Article 6 related to lawfulness of processing, both of which covering the main obligations to be considered as compliant for any given personal data processing. However, as those articles constitute general principles, the approach described creates a core which a person skilled in the art can further extend to cover other aspects of the GDPR or can apply to other data protection regulation.

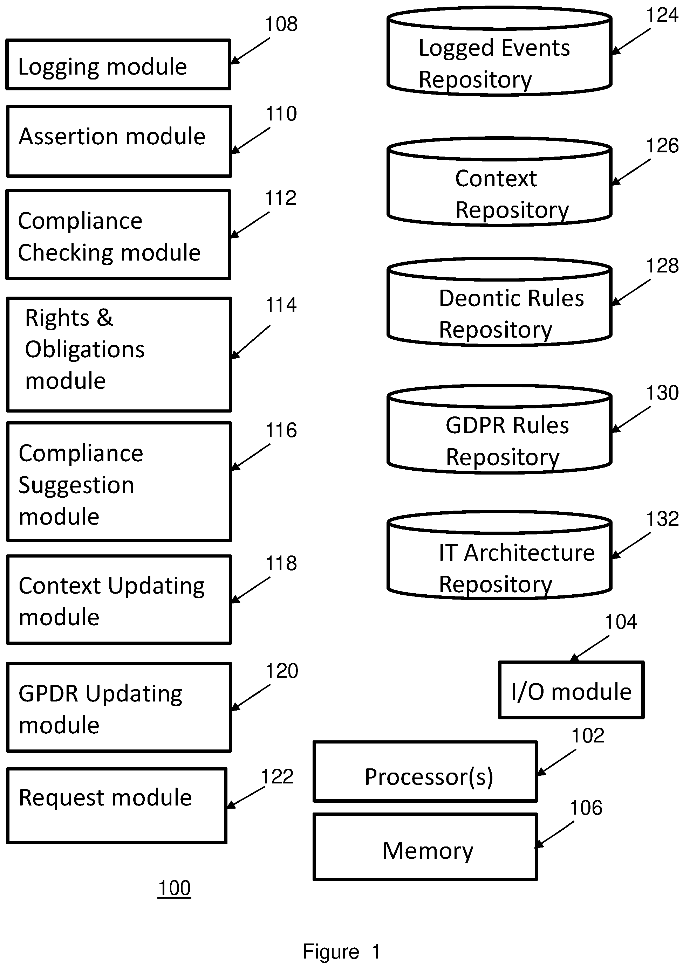

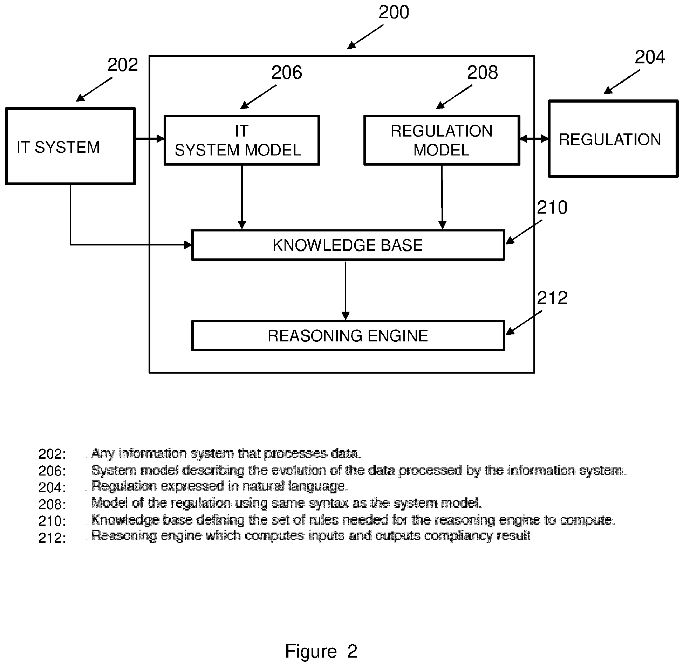

Figure 1 and Figure 2 provide block diagrams of the system of the present invention.

Referring first to FIG. 1, an apparatus 100 in accordance with some exemplary embodiments of the disclosed subject matter is shown. In some exemplary embodiments, apparatus 100 may be configured to perform checking of data protection compliance in accordance with the present invention. Apparatus 100 may comprise one or more processor(s) 102. Processor 102 may be a Central Processing Unit (CPU), a microprocessor, an electronic circuit, an Integrated Circuit (IC) or the like. Processor 102 may be utilized to perform computations required by apparatus 100 or any of its subcomponents. In some exemplary embodiments, apparatus 100 may comprise an Input/Output (I/O) module 104. I/O module 104 may be utilized to provide an output to and receive an input from a user, from a computerized apparatus or from another apparatus similar to apparatus 100. In some embodiments, the I/O module may receive a dynamic program of an application, and may output results of the execution of the method of the present invention. In some exemplary embodiments, apparatus 100 may comprise a memory 106. Memory 106 may be a Hard Disk Drive, a Flash disk, a Random Access Memory (RAM), a memory chip, or the like computer-readable storage medium. Memory 106 may retain machine executable instructions operative to cause processor 102 to perform acts associated with any of the subcomponents of apparatus 100.

Apparatus 100 further comprises at least the following components:
- A Logging Module 108;
- An Assertion module 110;
- A Compliance Checking Module 112;
- A Rights & Obligations Module 114 ;
- A Compliance Suggestion Module 116;
- A Context Updating Module 118 ;
- A GPDR Updating Module 120 ;
- A Request Module 122;
- A logged Events Repository 124;
- A Context Repository 126;
- A Deontic Rules Repository 128
- A GPDR Rules Repository 130;
- An IT Architecture Repository 132.

Each of the components provides the following function:
- the Logging module 108 is configured to capture and log all events occurring in the IT system.
- the Assertion module 110 is configured to allow an authorized person to assert some propositions which are required in order to check for compliance, due to the fact that some propositions cannot be checked by the compliance checker, and thus require a human intervention.
- the Compliance Checking module 112 also named as compliance checker is a computing engine configured to detect violations and to raise alerts if a non-compliance situation is detected.
- the Rights and Obligations module 114 is configured to allow the compliance checker to infer rights and obligations related to the controller and to the subjects of the data processing, drawn from the logs of the IT system.
- the Compliance Suggestion module 116 is configured to provide recommendations in order to comply with GDPR (or the considered regulation), whenever the processing is violating one or several provisions from the regulation.
- the Context Updating module 118 is configured to update the context of the data processing (data subject, erasure of data...).
- the GDPR Updating module 120 is configured to update the GDPR rules, for instance whenever a new case law provides a clear answer about a provision stated in the regulation, which makes the interpretation of the law evolve.
- the Request module 122 is configured to allow a user of the compliance checker to submit a query about the compliance of a data processing occurring in the IT system.
- the Logged events repository 124 contains the list of events having occurred in the IT system.
- the Context Repository 126 contains a knowledge base about the context under which the IT system operates. The contextual data (for instance, name of the subjects, the age, etc.) is necessary for the compliance checker to carry out its operations.
- the Deontic Rules repository 128 contains a set of deontic rules used by the compliance checker to determine the rights and obligations of stakeholders.
- the GDPR Rules repository 130 contains a set of formal rules translating the GDPR provisions in a specific structure and format, to be used by the compliance checking module to detect whether a given data processing occurring in the **IT** system violates any provision.
- the IT Architecture repository 132 contains an architecture representation of the **IT** system that is processing personal data and for which compliance is to be checked.

As stated before, systems can be modelled in many different ways and the choices made depend on the objectives targeted. Working on the GDPR entails dealing with a large quantity of material. For this reason, the inventors have chosen to strictly translate the words from the GDPR, to keep track of the provisions in the program, and make sure to not go beyond the legal obligations and principles stated in the regulation.

In such circumstance, the first step has been to choose and narrow the scope of the regulation. For instance, it has been chosen not to deal with the situation where a data processor is actually processing personal data, but only to focus on the data controller who is liable for the processing of personal data. Indeed, the GDPR gives a key role to the data controller who determines the means and purposes of the processing. The data processor is subject to obligations that are deeply linked with the data controller's ones. As a result, provisions regarding the data processor may be added up to the rules already translated, when such a data processor is involved. This is a situation where a false alert can be raised.

Another benefit of a close text translation of the GDPR is to allow the involvement of a person, such as a DPO, whose role is to ensure compliance with data protection issues. The inventor's work aims at being a tool to aid for compliance checking, rather than providing all right answers in order to achieve compliance. In case of inconsistency between the IT system log and the regulation, a data protection practitioner is required to interpret any answer given by the program, and to implement or update the knowledge base of the program.

The methodology developed by the inventors has mostly been driven by Maxwell and Antón's methodology which implies rights, obligations and permissions as a systematic step, when translating legal rules.

However, the inventor's approach differs from the previously cited one as the proposed method considers the appropriate rules by identifying the involved elements (processings, personal data, data subjects, or other persons, for instance) as well as their relationships to one another. This step implies identifying the conditions for an obligation to be applicable to the data controller as well as any disjunctions. The initial translations of the legal rules into actions and states are implemented to make them closer to how an abstract machine works. For this reason, a concrete vision of every obligation and constrained compliance to some specific actions or states of the data processing are adopted. Further, some deontic propositions to express obligations for the controller are included. In addition, a pattern is dedicated to verify the conditions of success of a request from a data subject about one of his or her rights.

Going now to figure 2, a high level view of the main components 200 to operate the method of the present invention for an IT system 202 as regard to its compliance to a regulation 204 is shown and described.

The IT system 202 may be any computing environment from a single computer to any network having a plurality of computers organized to process data according to any kind of simple or more complex processing. The method of the invention allows checking compliance of the IT system processing to a regulation 204 expressed in natural language.

Advantageously, the invention is based on a logic modelling of both the IT system, i.e. the IT System model 206, and of the regulation, i.e. the regulation model 208. In a preferred embodiment, the logic modelling of each model uses a similar syntax.

### The Logic Modelling:

To express legal rules of a regulation into a formal computing language, in a preferred embodiment the inventors use the Prolog language, as it allows dealing with implication and instantiation of variables through concrete elements.

As the skilled person knows, this language is declarative, meaning the need to declare a knowledge base and to define a set of rules in order to resolve a given query. Through a solving strategy that is called backtracking and which is a well-known routine automatically handled by Prolog, the process underlying the method of the invention allows providing a reply to a query by using instantiation of the variables used in the rules.

However, the Prolog language is just one example of a declarative language adapted to describe the rules, but the skilled person would devise using another language allowing formal description of rules, such as the Datalog language or the Answer Set Programming (ASP) language. Similarly, in a preferred embodiment the Selective Linear Definite (SLD) clause resolution algorithm is used, but the skilled person would devise using any other variant of resolution algorithms.

For instance, two rules can be defined as depicted below, with four variables A, B, C and D.

| |
|---|
| A ← B, C. |
| A ← ¬D. |

The first proposition or rule declares that in order to verify A, it has to be checked whether B and C can be proved. The arrow means the implication relation between A on one hand and B and C on the other hand. If B and C are proved (considered as true by Prolog), then A is true. The comma after B means a conjunction between B and C: if B is proved but C is not, then A is not true. The point means the end of the proposition. In these two rules, the variable A on the left is named as the "head" of the two rules, wherein the two "bodies" on the right differ. As a consequence, there is two ways to prove A, the point at the end of the propositions implies a disjunction, where A can be proved if both B and C are proved, but also if the negation of D is proved. The negation in the example is marked as "¬" (but should be replace by "\+" in Prolog), meaning that in the second proposition or rule, A is proved if the program cannot prove D.

To prove the rules, the process uses the knowledge base, and tries to instantiate the variables (for example A, B, C and D) to constants that are stated in the knowledge base, i.e. the process allows replacing the variables by constants. The unification is the operation of instantiating the constants where the variables are declared. Finally, the backtracking operation allows the program to go back to higher rules when an answer is given as "false", in order to try every solution to reach a "true". In the end, the result replied by the program is an affirmation or a refutation of the original query.

The inventors consider Prolog as an effective programming language that is suitable to translate legal rules in a formal language. As stated, its operation requires declaring a knowledge base and a set of rules which is appropriate to achieve logic modeling of the legal text.

Indeed, to check for legal compliance, the controller needs some inputs (a knowledge base) and some obligations to fulfill with (a set of rules). However, Prolog having its own limits, the inventors have developed a solution to avoid those limits. To exemplify, a legal provision generally doesn't describe all the notions and elements involved, whereas Prolog would need a reference to every element concerned in this provision to translate the legal rule. Consequently, the constraints due to Prolog syntax have impacted the way the legal rules have been translated by the inventors. It is appreciated that while the example is described for reachability conditions instantiated as to reflect the class of code protection of opaque predicates (i.e. proving a branch is not feasible), the method of the present invention may be used for reachability conditions instantiated as to reflect the class of code protection of call stack tampering (i.e. proving a return instruction always go back to its caller instruction).

### The IT System Model 206:

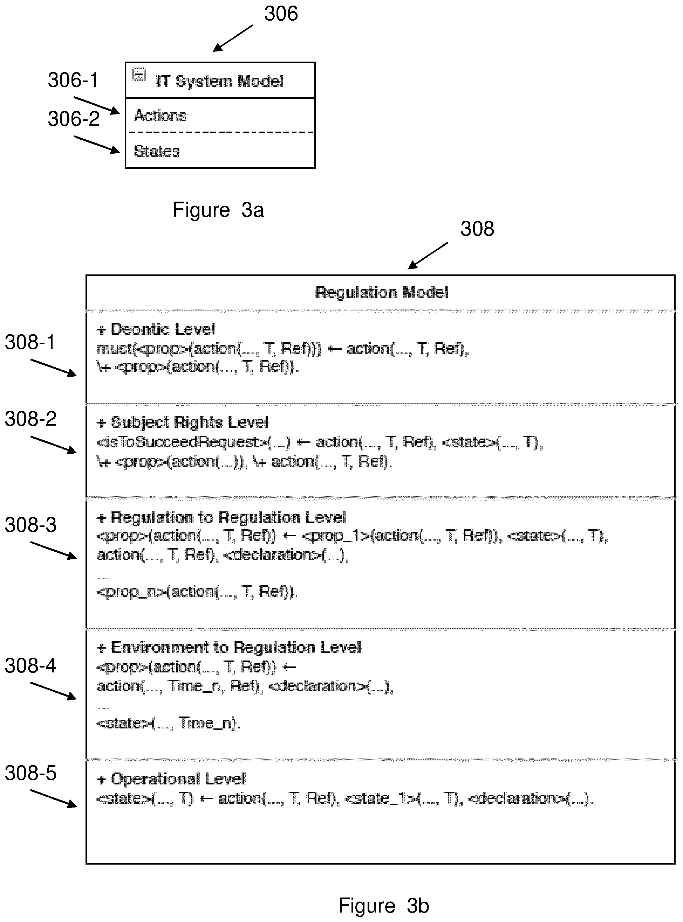

The IT system 202 represents any information system that is processing data, under the responsibility of a data controller. The model 206 of such IT system describes the evolution of the data processing, through actions (306-1) and states (306-2) as shown on the IT System Model 306 of figure 3a.

The IT system is modelled so that actions and states express the evolution of the system, i.e. the evolution of every action occurring about the data processing. It is to be appreciated that one main feature of the IT system model (as well as of the Regulation model) is a "time" indicator used as a parameter for the determination of the compliance.

In a preferred embodiment, a state machine describes the evolution of the system, through the states of that machine. In order to change of state, an action must happen. For instance, if an action in the processing occurs, a state may be reached. But, to reach a state, another state may be required. This idea is expressed as below:

| | |
|---|---|
| <state>(..., T) ← | |
| | action(..., T, Ref), |
| | ... |
| | <state>(..., T). |

The "<" and ">" quotation marks are used to indicate that the word will be substituted in the language.

The Actions: an action is described with a specific pattern shown below, wherein an Action "action" consists in an "Operation", performed by someone, identified as a "Doer". This action occurs at a certain time "Time" and holds a reference "Reference" to allow a direct reference later. For instance, the reference consists in a document the data controller must record in order to prove that a consent has been given. This reference can then be expressed later when the data subject withdraws his or her consent.

| |
|---|
| action(Doer, Operation, Time, Reference). |

The States: a State is expressed with a different pattern as presented below:

| |
|---|
| <state>(PersonConcerned, Object, PersonalData, Time). |

A State "state" concerns a person "PersonConcerned" who is directly involved in the situation which is described, for example, the data controller or the data subject. A state relates to an element "Object",for instance a request, and is linked to personal data "PersonalData". In addition, a state is reached at a certain time "Time".

Even though actions are written in the patterns with the word "action", the word "state" doesn't appear in this syntax. A state is always replaced by an expression describing the state, including a present perfect verb. For instance, the expressions "isProvided" or "isMinimised" are used to replace the variable "state" and to describe the state. Advantageously, the choice of using a present perfect verb is made in order to faithfully express a state of the system.

Therefore, the IT system model 206 expresses that if an action and/or a state is proved by the checking process, then a state is reached in the system.

The below table shows for a consent to be considered as withdrawn, the conditions for a state to be reached. If the two actions are completed, then the state is considered as reached:

| | |
|---|---|
| isWithdrawn(DataSubject, document(ProofConsent), PersonalData, Time_Withdrawal) ← | |
| | action(DataSubject, withdrawsConsent(DataSubject, Purpose, PersonalData), |
| | Time_Withdrawal, ReferenceProcessing), |
| | action(DataController, recordsDocument(document(ProofConsent, DataSubject), |
| | Time_Withdrawal, _). |

To verify this state, two actions must happen: the data subject withdraws his or her consent, and the data controller records a document related to the consent and its withdrawal.

### The Regulation Model 208:

A Regulation 204 provides broad provisions and obligations that data controllers need to comply with, when processing personal data. Even if for the GDPR application, the described approach focuses on Articles 5 and 6 (and other articles that relate to these ones), the GDPR itself is not sufficient to understand the concepts stated in the provisions and their scopes, and there is the need to use other sources, such as for example take into account the opinions of Article 29 Data Protection Working Party, or the French supervisory authority opinions' (the "CNIL") or the recitals of the GDPR.

The GDPR Modelling: The GDPR provides rules to ensure data protection for subjects whose personal data are processed. As stated before, one face difficulties reading the GDPR's rules; the scope and the wording of the text have bring the inventors to adopt an approach that remains close to the terms. The other difficulty for the inventors was to derive logic rules from the European regulation: the syntax they have used reflects the rules in their extent, without translating beyond or above the legal text. To achieve this goal, they have been driven by previous works on legal modelling, that focus on expression of rights, permissions, obligations, but also on implied rights, permissions and obligations drawn from the provisions.

Furthermore, these logic rules had the need to be articulated in order for a logic organization to be designed between them. For instance, there is the need to know what obligation relates on another one. The GDPR does not systematically provide such logic articulation between the provisions, but introduces some cross-references. Thus, modelling the GDPR leads the inventors to separate the rules into several levels, following a hierarchy that is deduced from the text. The architecture that is drawn from the GDPR's rules is shown on figure 3b.

However, as stated before, the GDPR model must be expressed using the syntax used for the state machine, i.e. the syntax expressing actions and states. As a consequence, an operational level in the GDPR model is expressed through actions and states. These actions and states will then be linked to the GDPR's provisions.

Indeed, the provisions of the GDPR are structured into several levels to articulate the rules.

Deontic Level (308-1): This level aims at expressing obligations for the controller, when an action occurs in the system. Table below provides an example of the use of deontic concepts about the GDPR's rules.

| | |
|---|---|
| must(<prop>(action(..., T, Ref))) ← | |
| | action(..., T, Ref), |
| | \+ <prop>(action(..., T, Ref)). |

This pattern expresses a deontic obligation for a doer, when an action occurs in the system, and the obligation on this action is not fulfilled yet. If the two conditions can be proved by the program, then the controller needs to comply with this top-obligation. This pattern uses the term "must" in the propositions for the following reason: Deontic obligations are implied in the GDPR, but they are formulated to detect the obligations that the data controller has to comply with, when an action happens. This deontic idea is expressed through the word "must", meaning the data controller must comply with a legal obligation, if the relevant action happens, as shown below. Thus the deontic level uses the actions recorded in the system to infer obligations for the controller.

| | |
|---|---|
| must(processesCompliant(action(DataController, processes(DataSubject, Purpose, | |
| | PersonalData), Time_Process, Reference))) ← |
| | action(DataController, processes(DataSubject, Purpose, PersonalData), |
| | Time_Process, Reference). |

Data Subjects Rights Level (308-2): Another part of the program deals with requests from data subjects concerning their rights. The idea is that the controller must accept the request concerning a right if the conditions are proved by the program. To this aim, an action may be required, or a state, to verify that the conditions are checked.

For the syntax, a property pertaining to an action is denoted by "prop". For instance, an action representing a data processing might be "processesCompliant" or not, which is a property. If an action is not verified (i.e. is not compliant), then the data controller may have an obligation to accept a request from a data subject as shown below:

| | |
|---|---|
| <isToSucceedRequest>(...) ← | |
| | action(..., T, Ref), |
| | <state>(..., T), |
| | \+ <prop>(action(...)), |
| | \+ action(..., T, Ref). |

For example, the conditions to be successful for a request about the right to object are shown below:

| | |
|---|---|
| isToSucceedObjectionRequest(DataSubject, objection(Reference), PersonalData, _) ← | |
| | action(DataController, processes(DataSubject, Purpose, PersonalData), |
| | Time_Process, Reference), |
| | action(DataSubject, asksForRight(objectsProcessing(DataController, Purpose), |
| | Time_Request, Reference)), |
| | Time_Process =< Time_Request, |
| | action(DataSubject, motivatesRequest(DataSubject, Purpose, PersonalData), |
| | Time_Request, Reference), |
| | \+ action(DataController, |
| assertsLegitimateGroundsForProcessingOverrideRightsFreedoms(DataSubject, | |
| | Purpose, PersonalData), Time_2, Reference), |
| | Time_Request =< Time_2. |

Three actions have to be recorded in the log, and one has to not be proved by the program. Precisely, the first action is a processing of personal data, the second one is a request from the data subject about the right to objection ("asksForRight"); the third one expresses the data subject motivating its request ("motivatesRequest"). Then, the last proposition refers to an action from the controller who asserts that he finds legitimate grounds for the processing which override the rights and freedoms of the data subject. Indeed, if this action is not proved, then the controller can't refuse the objection to the processing, he must accept the request.

Translating these conditions in a right to objection to succeed enables to state later in the model that the controller must stop the processing when this property is proved.

"Regulation to Regulation" Level (308-3): This part of the model aims at expressing how the legal rules are articulated between each other. In that way, several sub-obligations are needed to verify if a higher obligation is considered as fulfilled. The table below shows an example.

| | |
|---|---|
| <prop>(action(..., T, Ref)) ← | |
| | <prop_1>(action(..., T, Ref)), |
| | <state>(..., T), |
| | action(..., T, Ref), |
| | <declaration>(...), |
| | ... |
| | <prop_n>(action(..., T, Ref)). |

Again, the term "prop" is used to express a property upon an action. This property is proved if other properties upon the same action are proved. The obligation ("prop") and sub-obligations ("prop_1", "prop_n") are always linked to the same action performed by a doer (Doer). But a state or an action may also be required to verify the top property.

Finally, some declarations ("declaration") that bring values needed to resolve the query are added.

For instance, the table below illustrates the conditions for a transparent processing to be proved by the program. Here, the sub-obligation to be fulfilled is "providesTransparentinformation"; an action and a state defined as "isDemonstrableCompliance" are also required.

| | |
|---|---|
| processesTransparent(action(DataController, processes(DataSubject, Purpose, | |
| | PersonalData), Time_Process, Reference)) ← |
| | action(DataController, processes(DataSubject, Purpose, PersonalData), |
| | Time_Process, Reference), |
| | providesTransparentInformation(action(DataController, processes(DataSubject, |
| | Purpose, PersonalData), Time_X, Reference)), |
| | Time_X =< Time_Process, |
| | isDemonstrableCompliance(demonstratesTransparency(document(ProofProcess)), |
| | DataController, Reference, PersonalData, Time_Compliance). |

In addition, the inventors have introduced the use of time indicators. They state that the time of the process "Time_Process" has to be greater (i.e. denoted by symbol "=<") than the time "Time_X" for the controller to deliver the information. If not proved, this time constraint would terminate the query resolution with a false reply.

Environment to Regulation Level (308-4): This level in the architecture deals with the actions and states that will prove an obligation is fulfilled. Table below shows the format of the pattern for this level: to verify that a property is fulfilled, an action or a state is required, and some declarations are added to provide more details about the elements involved in the rule.

| | |
|---|---|
| <prop>(action(..., T, Ref)) ← | |
| | action(..., Time_n, Ref), |
| | <declaration>(...), |
| | ... |
| | <state>(..., Time_n). |

For instance, the example below illustrates the obligation for the controller to process personal data fairly, denoted as "processesFair".

| | |
|---|---|
| processesFair(action(DataController, processes(DataSubject, Purpose, | |
| | PersonalData), Time_Process, Reference)) ← |
| | action(DataController, assertsFairInformation(DataSubject, Purpose, |
| | PersonalData), Time_X, Reference), |
| | action(DataController, assertsFairProcessingTowardsDataSubject(DataSubject, |
| | Purpose, PersonalData), Time_Process, Reference), |
| | Time_X =< Time_Process, |
| | isDemonstrableCompliance(demonstratesFairness(document(ProofProcess)), |
| | DataController, Reference, PersonalData, Time_Compliance). |

For this obligation to be verified, two actions performed by the controller must happen, and a state has to be reached. The first action is an assertion from the controller who confirms that the information provided to the data subject is fair, denoted as "assertsFairlnformation". This action is linked to the transparency principle of processings, but the inventors choose not to bind transparency and fairness together here. The second action refers to a fair processing towards the data subject, denoted as "assertsFairProcessingTowardsDataSubject" and does not concern transparency.

Indeed, the translation of the fairness principle led the inventors to some difficulties. The fairness principle appears to have a key role among data protection rules, according to its repetition in the GDPR. However, the regulation doesn't give any detail nor condition to consider a fair processing. In order to translate "fairness" into the two actions described earlier, other sources were used such as the Guidelines of the Data Protection Working Party on transparency under the GDPR. The reading of the guidelines shows that fairness is not an autonomous principle. In the Guidelines, fairness is deeply linked to transparency of the information delivered to the data subject. However, Recital 39 in the GDPR states that "natural persons should be made aware of risks, rules, safeguards and rights in relation to the processing of personal data" to fulfil the fairness principle. Yet, the inventors chose not to link fairness to transparency, and remain close to the Recital 39, because the two principles are clearly divided in Article 5.

Consequently, they express two actions by the controller; the first one reflects the relation between fairness and transparency of the information; the second one refers to the substance of the information. In doing so, they assume that the controller or the DPO will perform a positive action to assert that fairness of the processing and fairness of the information are satisfied. The last proposition in the rule refers to the accountability obligation: the state denoted "isDemonstrableCompliance" would be reached if the controller can demonstrate he is compliant about fairness.

Operational Level (308-5): The last level in this architecture is an operational level that links actions and states. The pattern shown in table below allows defining how a state may be reached in the system: when actions and states are proved by the program.

| | |
|---|---|
| <state>(..., T) ← | |
| | action(..., T, Ref), |
| | <state_1>(..., T), |
| | <declaration>(...). |

As an operational level example, table below provides the definition of a processing necessary for the performance of a task carried out in the public interest.

| | |
|---|---|
| isNecessaryProcessingForPerformanceTaskPublicInterest(DataController, | |
| | TaskPublicInterest, PersonalData, Time_X) ← |
| | action(DataController, processes(DataSubject, Purpose, PersonalData), |
| | Time_Process, Reference), |
| | taskPubliclnterestByDataController(TaskPubliclnterest, DataController), |
| | action(DataController, |
| | assertsProcessingNecessaryForPerformanceTaskPublicInterest(DataSubject, |
| | Purpose, PersonalData), Time_X, Reference), |
| | Time_X =< Time_Process. |

Two actions are required in order to reach this state. The first action concerns the processing of personal data undertaken by the controller; the second action relates to the controller, asserting the processing is necessary for the task he is carrying out in the public interest, and which is defined as:
"assertsProcessingNecessaryForPerformanceTaskPublicInterest".

Through a declaration, the syntax allows to express which task is carried out by this data controller in the public interest ("taskPublicInterestByDataController"). Finally, the program compares two "time" indicators: the assertion of the controller must happen before the beginning of the processing.

Going back to figure 2, there are then two models: the **IT** system model 206 that must reflect exactly the state of the IT system, and the Regulation/GDPR model 208, that must reflect exactly the data protection rules from the regulation.

The system 200 further comprises a Knowledge Base module 210 and a Reasoning Engine 212.

As previously explained, the compliance checker calls for the IT system log which is composed of the events occurring about a certain processing of data. The values of the events are concrete, i.e. instantiated. The log represents a knowledge base of the compliance checker.

The events are recorded in the log as 'actions' with the time of their occurrence. Table below illustrates an example of an action recorded in the log which is: a data controller (i.e. "Google") provides information about the right to withdraw a data subject's consent, for processing of personal data of a subject (i.e. "id_Jack"), at time "5", with a form to be used to provide this information (i.e. "privacy_form").

| |
|---|
| action(google, givesInformationRightToWithdrawConsent(jack), id_jack, 5, privacy_form). |

Furthermore, the compliance checker relies on another knowledge base, which describes with declarations the concrete context of the processing of personal data. These declarations permit to add some information to the actions from the log.

Table below illustrates three declarations.

| |
|---|
| taskPublicInterestByDataController(police, intelligenceService). |
| taskOfficialAuthorityByDataController(dataProtection, supervisoryAuthority). |
| legitimateInterestOfDataController(fraudPrevention, anyAuthority). |

These declarations allow to know that "police" is designated as a task carried out by the "intelligenceService" which is the data controller here. In the same way, the "supervisoryAuthority" carries out a task that is "dataProtection". The third declaration states that "fraudPrevention" is a legitimate interest defended by the data controller (i.e. denoted as "anyAuthority").

Thus, the log and the context are a knowledge base 210 used as input to the reasoning engine 212 to compute compliance results.

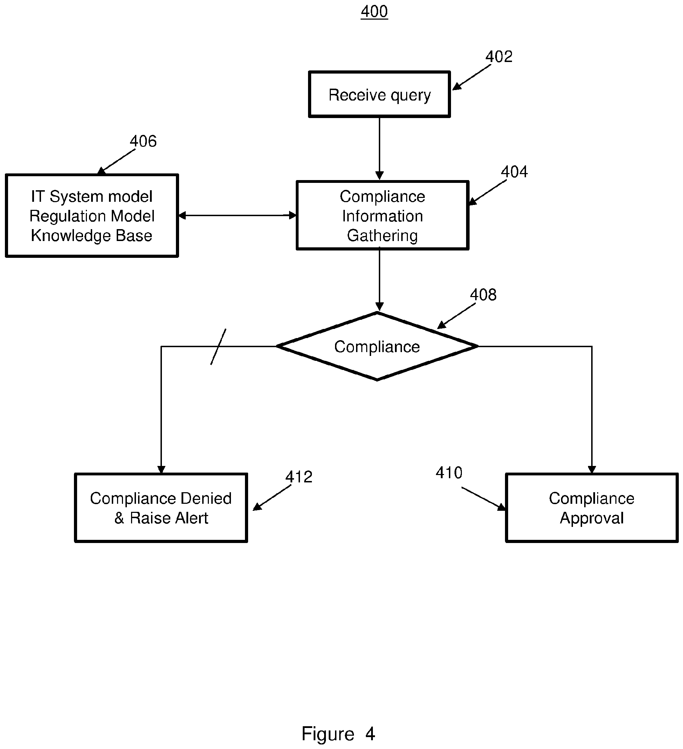

Figure 4 is a flow chart of the main steps of the compliance monitoring process 400 of the present invention.

Generally, the compliance monitoring process allows comparing a log from the IT system (storing a list of all events that happened in the system), with the two models, the IT model and the Regulation model. This is a dynamic approach which is carried out to check for compliance about a processing of personal data.

When determining for potential violations under the provisions of a Regulation, after receiving a query 402, the process allows in step 404 to gather information from the IT model and the Regulation model, the IT log of events that happened in the system, and additional information, about the context of the processing. The context information is provided through a complementary source (Knowledge Base with a set of declarations) which does not depend on the IT log. Then, the process allows for determining if there is compliance 408 or not, and allows replying the query about no violation, i.e. as a 'Compliance Approval' 410 or replying about a potential violation of the Regulations rules 412.

In a preferred embodiment, a query 402 is preferably defined as shown in the table below.

| | |
|---|---|
| isViolating(action(..., T, Ref)) ← | |
| | must(<prop>(action(..., T, Ref))), |
| | \+ <prop>(action(..., Time, Ref)). |

The compliance checker can thus be queried about a mandatory obligation for the controller to fulfill upon an action (designated as "must"). This part refers to the deontic level exposed earlier.

The second proposition asks if the property upon the same action is not proved ("\+ prop"). If the obligation exists and if the property is not proved (i.e. the conditions cannot be met), then the process allows providing an "isViolating" answer, meaning that the action is violating the Regulation provisions.

For instance in table below, the proposition defines that if the data controller has an obligation to process personal data compliantly ("processesCompliant"), and if this processing is not proved as compliant ("\+ processesCompliant"), then it is violating the relevant data protection rules.

| | |
|---|---|
| isViolating(action(Doer, processes(DataSubject, Purpose, PersonalData), | |
| | Time_Process, Reference)) :- |
| | must(processesCompliant(action(Doer, processes(DataSubject, Purpose, Personal |
| | Data), Time_Process, Reference))), |
| | \+ processesCompliant(action(Doer, processes(DataSubject, Purpose, Personal |
| | Data), Time_Process, Reference)). |

Therefore, the compliance checker's role is to detect when a processing doesn't fulfill the obligations needed to achieve compliance. The time of actions are taken into consideration, as part of the compliance checking.

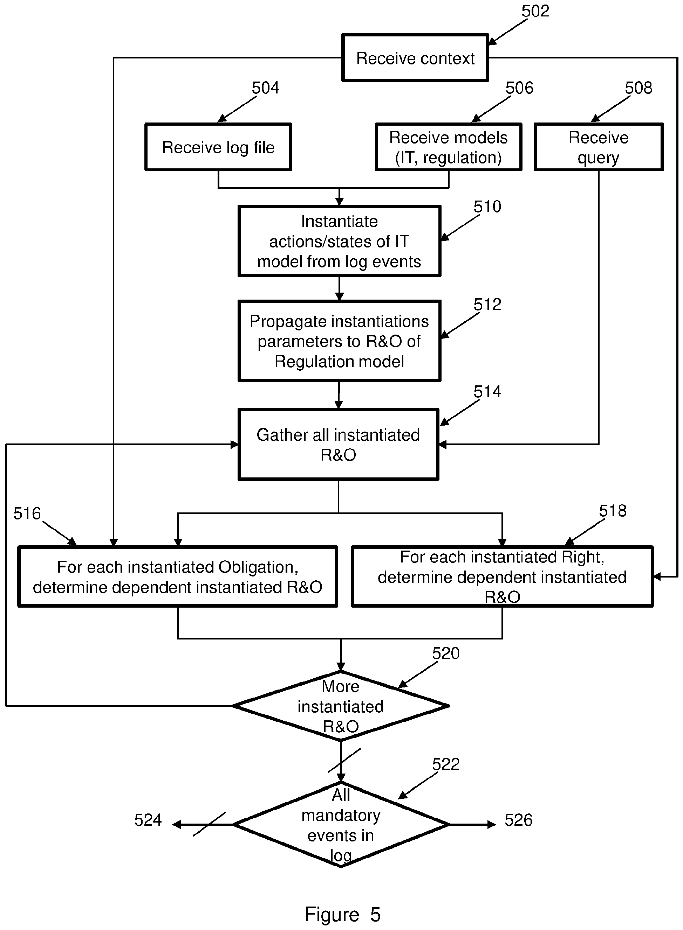

Figure 5 details the operations of the compliance determination step 404 of figure 4.

As previously stated, the compliance checker gathers the two models 506, and receives as input the knowledge base (502, 504), to solve a query 508by verifying the rules, relying on the knowledge base. One important assumption here is the log soundly reflects the IT system behavior: all events appearing in the log should have actually happened in (as events), and all events actually happening should appear in the log (as actions).In a first step 510, the process allows instantiating actions of the IT model from the log events. In a preferred embodiment, the Prolog's instantiation of the variables are used.

Next, the process allows to propagate the instantiations parameters to the rights and obligations (R&O) of the regulation model, and on a next step 514 allows to gather all instantiated R&O.

The process next allows on step 516 for each Obligation to determine the dependent instantiated R&O and on step 518 for each Right to determine the dependent instantiated R&O.

The process repeats 520 the determination steps (516, 518) of dependent instantiated R&O until all instantiated R&O are processed.

At the end 522, the process allows determining if all mandatory events are present in the IT system log, and providing the information whether a processing of personal data performed through the system is violating the rules 524 or not 526.

### Example:

An example of a rule that is analyzed by the compliance checker is provided to better illustrates the compliance process. The rule described in the table below expresses the three actions needed for an information provided by a data controller to be proved as being transparent. These conditions are the clarity, the conciseness, and the accessibility of this information.

| |
|---|
| isProvidedTransparentinformation(DataController, Reference, PersonalData, Time_X) ← |
| action (DataController, givesClearInformationDataSubject(DataSubject, |
| Purpose, PersonalData), Time_X, Reference), |
| action (DataController, givesConciselnformationDataSubject(DataSubject, |
| Purpose, PersonalData), Time_X, Reference), |
| action(DataController, givesAccessibleInformationDataSubject(DataSubject, Purpose, |
| PersonalData), Time_X, Reference). |

The logs of the events in the IT system are recorded as shown below (with in this example, the data controller being a bank):

| |
|---|
| action(bank, givesClearInformationDataSubject(john, archiving, johnBankDetails), 1, archives_X). |
| action(bank, givesConciselnformationDataSubject(john, archiving, johnBankDetails), 7, archives_X). |
| action(bank, processes(john, archiving, johnBankDetails), 28, process_john). |

In this setting, a user prompt the query "isViolating" about the processing of John's personal data, with the instantiations from the above as depicted.

| |
|---|
| ?- isViolating(action(bank, processes(john, archiving, johnBankDetails), 28, process_john)). |

The process verifies whether there is an obligation to process the personal data compliantly, and then checks for every condition to achieve compliance. Considering the transparency rule, the process tries to instantiate the variables of the rule. However, only two actions - in top of the processing action itself - are recorded in the log, whereas the rule requires three actions. Indeed, the expression "givesAccessiblelnformation" doesn't appear in the log. As a consequence, the process will reply "true" and thus deduced that the processing is not compliant. To be able to capture the condition that is not fulfilled, a "trace" module (known in Prolog) provides instrumented ways to guide the auditor to the missing elements.

## Claims

1. A computer implemented method for monitoring compliance of computer data processing with data protection rules of legal regulation, wherein processing of data being implemented within an Information Technology system, the method comprising, on receiving a query for assessing compliance of a data processing to data protection rules, the steps of :
- gathering information from an IT log file that records all processing events having occurred in the IT system and gathering information on the context of the data processing from a context repository that records the context of data processing;
- running on the query a resolution algorithm to analyze the information gathered from the IT log file and from the context repository, as regard to actions and states that are expected to have occurred in the IT system and that are declared in an IT system model representing the IT system, and as regard to a set of rules with rights and obligations that are declared in a regulation model representing the protection rules of the legal regulation ; and
- according the result of the analysis, determining compliance or not.

2. The computer implemented method of claim 1 wherein the analyzing step comprises determining if the data processing does or doesn't fulfill a mandatory obligation.

3. The computer implemented method of claim 1 or 2 wherein the analyzing step comprises determining which action was expected to be present in the IT log file and which is not found.

4. The computer implemented method of anyone of claims 1 to 3 further comprising replying the query with a compliance approval when the determination step computes no violation, or replying the query with a compliance deny when the determination step computes a potential violation of the protection rules.

5. The computer implemented method of anyone of claims 1 to 4 wherein the analyzing step uses time as an indicator.

6. The computer implemented method of anyone of claims 1 to 5 wherein the logic modelling of the regulation model and of the IT system model uses a same syntax.

7. The computer implemented method of anyone of claims 1 to 6 wherein the set of rules is defined by a formal computing declarative language such as a "Prolog-like" language.

8. The computer implemented method of anyone of claims 1 to 7 wherein the resolution algorithm runs a backtracking routine.

9. The computer implemented method of anyone of claims 1 to 8 wherein the analyzing step comprising instantiating variables used in the rules.

10. The computer implemented method of anyone of claims 1 to 9 wherein the legal regulation is the General Data Protection Regulation "GDPR".

11. A system comprising means adapted to carry out the steps of the method according to any one of claims 1 to 10.

12. A computer program comprising instructions for carrying out the steps of the method according to any one of claim 1 to 10 when said computer program is executed on a suitable computer device.

## Patentansprüche

1. Computerimplementiertes Verfahren zum Überwachen der Einhaltung von Datenschutzvorschriften einer Rechtsverordnung bei einer Computerdatenverarbeitung, wobei das Verarbeiten von Daten innerhalb eines Informationstechnologiesystems implementiert wird, wobei das Verfahren beim Empfangen einer Abfrage zum Bewerten der Einhaltung von Datenschutzvorschriften bei einer Datenverarbeitung die folgenden Schritte umfasst:
- Sammeln von Informationen aus einer IT-Protokolldatei, die alle im IT-System aufgetretenen Verarbeitungsereignisse aufzeichnet und Sammeln von Informationen über den Kontext der Datenverarbeitung aus einem Kontext-Repository, das den Kontext einer Datenverarbeitung aufzeichnet;
- Ausführen eines Auflösungsalgorithmus auf der Abfrage, um die aus der IT-Protokolldatei und aus dem Kontext-Repository gesammelten Informationen zu analysieren, in Bezug auf Aktionen und Zustände, die erwartungsgemäß im IT-System aufgetreten sind und die in einem IT-Systemmodell deklariert sind, das das IT-System darstellt, und in Bezug auf einen Satz von Regeln mit Rechten und Verpflichtungen, die in einem Regulierungsmodell deklariert sind, das die Schutzregeln der Rechtsverordnung darstellt; und
- gemäß dem Ergebnis der Analyse, Bestimmen, ob die Einhaltung vorliegt oder nicht.

2. Computerimplementiertes Verfahren nach Anspruch 1, wobei der Analyseschritt das Bestimmen umfasst, ob die Datenverarbeitung eine zwingende Verpflichtung erfüllt oder nicht.

3. Computerimplementiertes Verfahren nach Anspruch 1 oder 2, wobei der Analyseschritt das Bestimmen umfasst, welche Aktion als in der IT-Protokolldatei vorhanden erwartet wurde und welche nicht gefunden wird.

4. Computerimplementiertes Verfahren nach einem der Ansprüche 1 bis 3, ferner umfassend das Beantworten der Anfrage mit einer Konformitätsgenehmigung, wenn der Bestimmungsschritt keinen Verstoß berechnet, oder das Beantworten der Anfrage mit einer Konformitätsablehnung, wenn der Bestimmungsschritt einen potenziellen Verstoß der Schutzregeln berechnet.

5. Computerimplementiertes Verfahren nach einem der Ansprüche 1 bis 4, wobei der Analyseschritt Zeit als einen Indikator verwendet.

6. Computerimplementiertes Verfahren nach einem der Ansprüche 1 bis 5, wobei die logische Modellierung des Regulierungsmodells und des IT-Systemmodells die selbe Syntax verwendet.

7. Computerimplementiertes Verfahren nach einem der Ansprüche 1 bis 6, wobei der Satz von Regeln durch eine formale deklarative Computersprache wie eine "Prologähnliche" Sprache definiert ist.

8. Computerimplementiertes Verfahren nach einem der Ansprüche 1 bis 7, wobei der Auflösungsalgorithmus eine Backtracking-Routine ausführt.

9. Computerimplementiertes Verfahren nach einem der Ansprüche 1 bis 8, wobei der Analyseschritt das Instanziieren von in den Regeln verwendeten Variablen umfasst.

10. Computerimplementiertes Verfahren nach einem der Ansprüche 1 bis 9, wobei die Rechtsverordnung die Datenschutz-Grundverordnung "DSGVO" ist.

11. System, das Mittel umfasst, die angepasst sind, um die Schritte des Verfahrens nach einem der Ansprüche 1 bis 10 zu vollziehen.

12. Computerprogramm, das Anweisungen zum Vollziehen der Schritte des Verfahrens nach einem der Ansprüche 1 bis 10 umfasst, wenn das Computerprogramm auf einer geeigneten Computervorrichtung ausgeführt wird.

## Revendications

1. Procédé mis en œuvre sur ordinateur permettant de surveiller la conformité d'un traitement de données informatiques à des règles de protection des données de règlement légal, dans lequel le traitement de données est mis en œuvre au sein d'un système informatique, le procédé comprenant, lors de la réception d'une demande d'évaluation de la conformité d'un traitement de données à des règles de protection des données, les étapes consistant à :
- collecter des informations d'un fichier journal informatique qui enregistre tous les événements de traitement qui se sont produits dans le système informatique et collecter des informations sur le contexte du traitement de données à partir d'un référentiel de contexte qui enregistre le contexte d'un traitement de données ;
- exécuter sur la demande un algorithme de résolution pour analyser les informations collectées à partir du fichier journal informatique et à partir du référentiel de contexte, en ce qui concerne des actions et états qui sont supposés s'être produits dans le système informatique et qui sont déclarés dans un modèle de système informatique représentant le système informatique, et en ce qui concerne un ensemble de règles avec des droits et des obligations qui sont déclarés dans un modèle de réglementation représentant les règles de protection du règlement légal ; et
- selon le résultat de l'analyse, déterminer la conformité ou non.

2. Procédé mis en œuvre sur ordinateur selon la revendication 1, dans lequel l'étape d'analyse comprend la détermination si le traitement des données respecte ou non une obligation impérative.

3. Procédé mis en œuvre sur ordinateur selon la revendication 1 ou 2, dans lequel l'étape d'analyse comprend la détermination de quelle action était supposée à être présente dans le fichier journal informatique et qui n'est pas trouvée.

4. Procédé mis en œuvre sur ordinateur selon l'une quelconque des revendications 1 à 3, comprenant en outre la réponse à la demande avec une approbation de conformité lorsque l'étape de détermination ne calcule aucune violation, ou la réponse à la demande avec un refus de conformité lorsque l'étape de détermination calcule une violation potentielle des règles de protection.

5. Procédé mis en œuvre sur ordinateur selon l'une quelconque des revendications 1 à 4, dans lequel l'étape d'analyse utilise le temps comme indicateur.

6. Procédé mis en œuvre sur ordinateur selon l'une quelconque des revendications 1 à 5, dans lequel la modélisation logique du modèle de réglementation et du modèle de système informatique utilise la même syntaxe.

7. Procédé mis en œuvre sur ordinateur selon l'une quelconque des revendications 1 à 6, dans lequel l'ensemble de règles est défini par un langage déclaratif informatique formel comme un langage de « type Prolog ».

8. Procédé mis en œuvre sur ordinateur selon l'une quelconque des revendications 1 à 7, dans lequel l'algorithme de résolution exécute une routine de retour arrière.

9. Procédé mis en œuvre sur ordinateur selon l'une quelconque des revendications 1 à 8, dans lequel l'étape d'analyse comprend l'instanciation de variables utilisées dans les règles.

10. Procédé mis en œuvre sur ordinateur selon l'une quelconque des revendications 1 à 9, dans lequel le règlement légal est le Règlement Général sur la Protection des Données « RGPD ».

11. Système comprenant des moyens adaptés pour réaliser les étapes du procédé selon l'une quelconque des revendications 1 à 10.

12. Programme informatique comprenant des instructions permettant de réaliser les étapes du procédé selon l'une quelconque des revendications 1 à 10, lorsque ledit programme informatique est exécuté sur un dispositif informatique apte.
